# FASCICULE DE BREVET EUROPEEN

(11) **EP 3 177 506 B1**
(45) Date de publication et mention de la délivrance du brevet: **12.09.2018**
(21) Numéro de dépôt: 15759851.7
(22) Date de dépôt: 17.07.2015
(51) Int. Cl.: B62D 21/15, B62D 25/20

(54) **PLANCHER AVEC TRAVERSE COMPRENANT UNE PORTION DEFORMABLE EN COMPRESSION**
FUSSBODEN MIT QUERTRÄGER MIT EINEM KOMPRESSIV VERFORMBAREN TEIL
FLOOR WITH CROSSMEMBER COMPRISING A COMPRESSIVELY DEFORMABLE PORTION

(30) Priorité: 04.08.2014 FR 1457572
(43) Date de publication de la demande: 14.06.2017
(73) Titulaire: PSA Automobiles SA, 78300 Poissy (FR)
(72) Inventeur: FONFREDE, Stéphane, F-90000 Belfort (FR)
(86) Numéro de dépôt international: PCT/FR2015/051983
(87) Numéro de publication internationale: WO 2016/020593

(56) Documents cités:
- DE-A1-102010 045 997
- DE-A1-102011 051 698
- US-B2- 7 500 714

## Description

L'invention a trait au domaine des véhicules automobiles, plus particulièrement à la problématique de l'absorption d'un choc latéral d'un véhicule automobile. Plus particulièrement encore, l'invention a trait à une structure de plancher de véhicule.

La réalisation d'une structure de plancher de véhicule varie généralement selon les éléments composant le plancher ainsi que leur forme. Les véhicules ayant une garde au sol limitée et un bloc moteur à l'avant du véhicule ont habituellement un plancher formant un tunnel de manière à créer un passage pour notamment un tuyau d'échappement de l'avant vers l'arrière du véhicule. Les longerons de bas de caisse et les traverses qui joignent le tunnel avec les longerons forment aussi classiquement la structure du plancher. Ces traverses forment généralement des supports pour les sièges du véhicule.

La réalisation d'une structure de véhicule doit satisfaire à de nombreuses prestations notamment des tests de choc. Parmi ces tests il existe le test de choc latéral, notamment le test contre un poteau, qui impacte en particulier la structure du plancher du véhicule.

Il est donc souhaitable de réaliser une structure de plancher qui puisse absorber l'énergie d'un tel choc latéral.

Or un nouveau protocole de test de choc latéral consiste en ce que le véhicule rencontre un poteau à 32km/h avec un angle de choc de 75° par rapport à la direction longitudinale du véhicule. Ce protocole est plus sévère en ce qui concerne la vitesse de choc, il génère également de nouvelles formes de contraintes pour la structure, en particulier, de par la direction de choc qui est intermédiaire entre un choc frontal et un choc transversal.

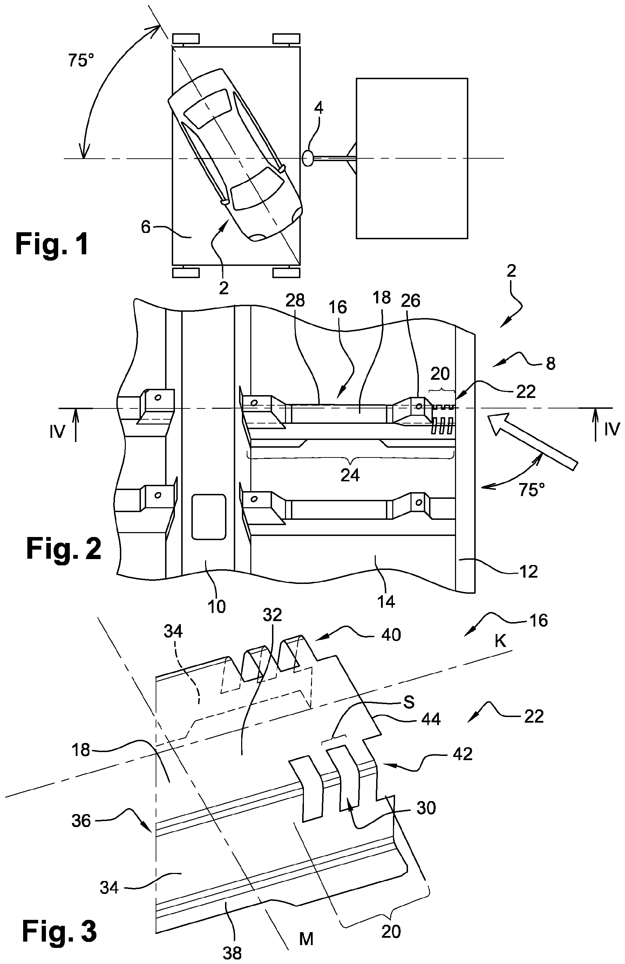

La figure 1 illustre un exemple des conditions d'un tel test de choc latéral d'un véhicule automobile 2 contre un poteau fixe 4. Lors de ce nouveau test, le véhicule 2 est monté sur une plateforme 6 lancée à 32km/h contre le poteau 4, le véhicule 2 étant orienté de manière à former un angle de 75° avec la direction de déplacement de la plateforme, et positionné de façon à ce qu'il percute le poteau 4 au niveau du conducteur. La déformation de l'habitacle engendrant des risques importants de blessures, notamment au niveau du thorax ou de l'abdomen, le test vise à donner une notation, notamment en lien avec l'amplitude de la déformation du plancher ; les déchirures ou autres déboutonnages de points de soudure sont en particulier à éviter car ils augmentent généralement drastiquement l'amplitude de déformation.

Le document de brevet US 8,079,635 B2 divulgue un plancher de véhicule comprenant une paroi principale et une traverse surélevée par rapport à la paroi du plancher et s'étendant de manière continue d'un longeron de bas de caisse à l'autre longeron. Les sièges sont montés sur la traverse. Celle-ci comprend par ailleurs une zone de déformation centrale, au-dessus du tunnel central du plancher. Cette solution de traverse est intéressante en ce qu'elle permet de canaliser l'absorption d'énergie d'un choc latéral vers la zone entre les sièges, ce qui favorise la sécurité des passagers. Le fait que la traverse soit surélevée impose une série de contraintes comme notamment une surélévation des sièges, un certain encombrement au niveau du plancher pour la zone des pieds des passagers arrière, et la fixation de la traverse au pied milieu. Aussi, la solution de cet enseignement n'est pas applicable ou peu efficace pour l'absorption d'énergie provenant d'un choc latéral de biais, en particulier à 75°, cette énergie pouvant se disperser autrement que dans la direction transversale au véhicule.

L'invention a pour objectif d'améliorer la sécurité des passagers lors d'un choc latéral, notamment dans le cadre de la nouvelle norme de choc contre un poteau à 75° et 32km/h. Plus particulièrement, l'invention a pour objectif de proposer une solution pour améliorer la capacité d'absorption d'énergie d'un plancher de véhicule comprenant une forme en tunnel en cas d'un tel choc latéral.

Le document US 7 500 714 B2 divulgue un plancher de véhicule automobile selon le préambule de la revendication 1. L'invention a pour objet un plancher de véhicule automobile comprenant : un tunnel central ; au moins un longeron s'étendant le long et à distance du tunnel central ; une paroi s'étendant transversalement depuis le tunnel central jusqu'au longeron ; et un ou plusieurs profilés s'étendant transversalement sur la paroi entre le tunnel et le longeron ; le ou au moins un des profilés comprenant une paroi profilée s'étendant sur la longueur du profilé, remarquable en ce que ladite paroi profilée comprend à son extrémité du côté du longeron une portion avec des moyens favorisant la déformation en compression dudit profilé en cas de choc latéral.

Selon un mode avantageux de l'invention, les moyens favorisant la déformation en compression comprennent une ou plusieurs encoches, lumières, ondulations, et/ou nervures sur la paroi profilée.

Selon un mode avantageux de l'invention, les moyens favorisant la déformation en compression s'étendent transversalement à la direction principale du ou des profilés, préférentiellement de manière successive le long de la dite direction.

Selon un mode avantageux de l'invention, la paroi du profilé forme au moins deux arêtes longitudinales, les moyens favorisant la déformation en compression s'étendant transversalement à la direction principale du ou des profilés sur au moins une des deux arêtes, préférentiellement sur les deux arêtes.

Selon un mode avantageux de l'invention, la portion du ou de chacun des profilés comprenant les moyens favorisant leur déformation s'étend dans la longueur du profilé sur une distance d'une valeur de plus de 10% de la distance entre le tunnel et le longeron dans la direction transversale du véhicule, préférentiellement plus de 15%, et/ou de moins de 25% de ladite distance.

Selon un mode avantageux de l'invention, les moyens favorisant la déformation en compression comprennent des lumières pratiquées dans la paroi profilée du profilé, chacune desdites lumières présentant une dimension longitudinale moyenne de plus de 4mm, préférentiellement 6mm, encore plus préférentiellement 8mm.

Selon un mode avantageux de l'invention, chacune des lumières a une surface comprise entre 40mm² et 400mm², préférentiellement entre 60mm² et 300mm².

Selon un mode avantageux de l'invention, le profilé présente une section en U renversé avec une base et deux jambes s'étendant depuis la base, les lumières favorisant la déformation en compression étant situées au niveau des jonctions entre la base et les jambes dudit profil en U.

Selon un mode avantageux de l'invention, le profilé comprend des pattes de fixation à la paroi du plancher.

Selon un mode avantageux de l'invention, le profilé est mis à forme par emboutissage ou par pliage, les lumières étant préférentiellement réalisées par un poinçonnage avant ladite mise à forme.

Selon un mode avantageux de l'invention, le profilé comprend au moins deux rangées longitudinales de lumières favorisant la déformation en compression, chaque rangée comprenant au moins deux, préférentiellement au moins trois desdites lumières.

Selon un mode avantageux de l'invention, les lumières d'une rangée longitudinale de lumières sont alignées, transversalement à la direction principale du ou des profilés, avec les lumières d'au moins une autre rangée longitudinale de lumières.

Selon un mode avantageux de l'invention, le plancher comprend un podium de siège rapporté sur le ou chacun des profilés, ledit podium s'étendant vers le longeron au-dessus de la portion comprenant les moyens favorisant la déformation en compression, et étant fixé par soudage directement au longeron.

Selon un mode avantageux de l'invention, une ou plusieurs lumière(s) sont situées au bord de l'extrémité du profilé et forme, chacune, une encoche audit bord.

Selon un mode avantageux de l'invention, le podium de siège est en un matériau ayant un module d'élasticité inférieur à celui du matériau du profilé correspondant, préférentiellement inférieur à 80% dudit module, encore plus préférentiellement inférieur à 60%.

L'invention a également pour objet un véhicule automobile comprenant un plancher conforme à l'invention.

Les mesures de l'invention sont intéressantes en ce qu'elles améliorent la sécurité des passagers du véhicule, notamment dans le cadre d'un choc latéral à 75° et 32km/h. La sécurité est améliorée en particulier grâce à la meilleure capacité du plancher à absorber l'énergie d'un tel choc. En effet, la ou chacune des portions des profilés transversaux qui comprennent les moyens favorisant leur déformation en compression est située à l'extrémité des profilés entre le tunnel et les longerons, et ce du côté du longeron, ce qui les rend apte à absorber une partie importante de l'énergie du choc.

D'autres caractéristiques et avantages de la présente invention seront mieux compris à l'aide de la description et des dessins parmi lesquels :
- La figure 1 illustre un exemple de choc latéral contre un poteau à 75° et à 32km/h d'un véhicule automobile ;
- La figure 2 est une vue en perspective d'un plancher de véhicule comprenant des profilés s'étendant transversalement avec des moyens favorisant la déformation en compression conforme à l'invention ;
- La figure 3 est une vue en perspective de la portion en extrémité d'un profilé de la figure 2 selon un mode particulier de réalisation ;
- La figure 4 est une vue en coupe IV-IV dans la direction transversale du véhicule du plancher de la figure 2 au niveau d'un profilé ;
- La figure 5 est une vue en perspective du plancher de la figure 2 en cours de déformation en cas de choc latéral à 75° et à 32km/h ;
- La figure 6 est une vue en coupe VI-VI transversale du plancher de la figure 2 en cours de déformation en cas de choc latéral à 75° et à 32km/h ;

La figure 1 a déjà été décrite précédemment dans le cadre de la discussion de l'art antérieur. Le véhicule automobile en question comprend un plancher conforme à l'invention.

La figure 2 est une vue en perspective d'un plancher 8 de véhicule 2 conforme à l'invention. Le plancher 8 comprend un tunnel central 10, au moins un longeron 12 disposé le long et à distance du tunnel central 10 ; une paroi 14 s'étendant transversalement depuis le tunnel central 10 jusqu'au longeron 12 ; et un ou plusieurs profilés 16 s'étendant transversalement sur la paroi 14 entre le tunnel 10 et le longeron 12. On peut voir une flèche à droite de l'image, elle représente la direction et le positionnement d'un choc latéral à 75° contre un poteau comme présenté en relation avec la figure 1. Le ou au moins un des profilés 16 comprend une paroi profilée 18 s'étendant sur la longueur du profilé 16 et comprenant à son extrémité du côté du longeron 12 une portion 20 avec des moyens 22 favorisant la déformation en compression du profilé 16 en cas de choc latéral. Cette mesure est intéressante en ce que les moyens 22 sont favorablement situés du côté extérieur du plancher 8 pour absorber de l'énergie du choc latéral et réduire la dispersion de cette énergie, en particulier dans la direction longitudinale du véhicule 2 ; La portion 20 du ou de chacun des profilés 16 comprenant les moyens 22 favorisant leur déformation s'étend dans la longueur du profilé 16 sur une distance d'une valeur de plus de 10% de la distance 24 entre le tunnel 10 et le longeron 12 dans la direction transversale du véhicule ; la portion 20 peut s'étendre sur plus de 15% de cette distance 24. La portion 20 peut s'étendre sur moins de 25% de cette distance 24. On peut voir que le plancher 8 comprend également un podium de siège 26 rapporté sur le ou chacun des profilés 16. Le podium 26 est rapporté sur le profilé 16, il s'étend vers le longeron 12 au-dessus de la portion 20 comprenant les moyens 22 favorisant la déformation en compression ; le podium 26 est finalement fixé par soudage directement au longeron 12. Cette mesure est également intéressante en ce qu'elle facilite la réalisation des moyens 22 dans la paroi 18 et ce indépendamment de la forme du podium 26. Le podium 26 peut être notamment fixé sur le profilé 16 par soudage. Les moyens 22 favorisant la déformation en compression du profilé 16 peuvent être réalisés sous la forme d'une ou plusieurs encoches, des lumières, des ondulations, et/ou des nervures sur la paroi profilée 16. Ces moyens 22 présentés à titre d'exemple ne limitent en rien l'invention. La paroi 18 profilée peut former au moins deux arêtes longitudinales 28, et les moyens 22 peuvent s'étendre transversalement à la direction principale du ou des profilés 16 sur au moins une des deux arêtes 28, préférentiellement sur les deux arêtes 28. Cette mesure est intéressante en ce que la raideur du ou des profilé(s) 16 dans la direction transversale du véhicule 2, qui correspond à la direction longitudinale du profilé 16, et en l'occurrence au niveau de ses arêtes 28, est favorablement réduite.

La figure 3 est une vue en perspective d'un profilé 16 du plancher conforme à l'invention et dans un mode particulier de réalisation. Le podium rapporté sur le profilé comme vu en relation avec la figure 2 n'est pas représenté. On peut voir la paroi 18 profilée comprenant la portion 20 avec les moyens 22 favorisant la déformation en compression du profilé 16 en cas de choc latéral. Les moyens 22 en question sont en l'occurrence des lumières 30, qui s'étendent transversalement à la direction principale du profilé 16 ; on peut observer qu'elles s'étendent de manière successive. Cette mesure est intéressante en ce que les lumières 30 fragilisent la portion 20 de la paroi 18 en extrémité du profilé 16, celle-ci étant apte à se comprimer au niveau des lumières 30 en cas de choc latéral et ce tel des soufflets d'accordéon. Les lumières 30 peuvent être d'une dimension moyenne « S » de plus de 4mm, préférentiellement 6mm, encore plus préférentiellement 8mm dans la direction longitudinale du profilé 16. Chacune des lumières 30 peut avoir une surface comprise entre 40mm² et 400mm², préférentiellement entre 60mm² et 300mm². Dans ce mode particulier de réalisation, le profilé 16 présente une section en U renversé avec une base 32 et deux jambes 34 s'étendant depuis la base 32, les lumières 30 favorisant la déformation en compression étant situées au niveau des jonctions 36 entre la base 32 et les jambes 34 dudit profil en U. Les jambes 34 du profilé 16 en question comprennent en l'occurrence des pattes 38 de fixation à la paroi du plancher (non représentée). Le profilé 16 peut comprendre au moins deux rangées longitudinales 40 et 42 de lumières 30, chacune des rangées 40 et 42 comprenant au moins deux lumières 30, préférentiellement au moins trois lumières 30. On peut observer la direction transversale du véhicule représentée sur l'image par l'axe K, celui-ci correspondant à la direction des rangées longitudinales 40 et 42 des lumières 30. Les lumières 30 d'une des rangées longitudinales 40 et 42 peuvent être alignées transversalement à la direction principale du ou des profilés 16 avec les lumières 30 d'au moins une autre des rangées longitudinales de lumières 30. On peut observer la direction longitudinale du véhicule représentée sur l'image par l'axe M, celui-ci pouvant correspondre à cet alignement. Cette mesure est intéressante en ce qu'elle favorise la compression du profilé 16 en cas de choc latéral, cette mesure ne limitant en rien l'invention. Les lumières 30 présentées sur l'image sont de forme rectangulaire. La forme des lumières 30 ne limite pas non plus l'invention. Le profilé 16 dans le mode de réalisation présenté est par ailleurs destiné à supporter le podium de siège vu en relation avec la figure 2, celui-ci pouvant être soudé au profilé 16 ainsi qu'au longeron (non représenté). Le ou chacun des profilés 16, dans ce mode de réalisation où il supporte un podium, peut s'étendre sur moins de 100% de la distance entre le tunnel et le longeron vue en relation avec la figure 2, la fixation du profilé 16 au longeron 12 étant alors réalisé via le podium. Une ou plusieurs lumière(s) 30 peuvent être situées au bord de l'extrémité du profilé et former, chacune, une encoche audit bord. Un tel profilé 16 peut être mis à forme par pliage ou bien par emboutissage, les lumières 30 étant favorablement réalisées par un poinçonnage avant ladite mise à forme.

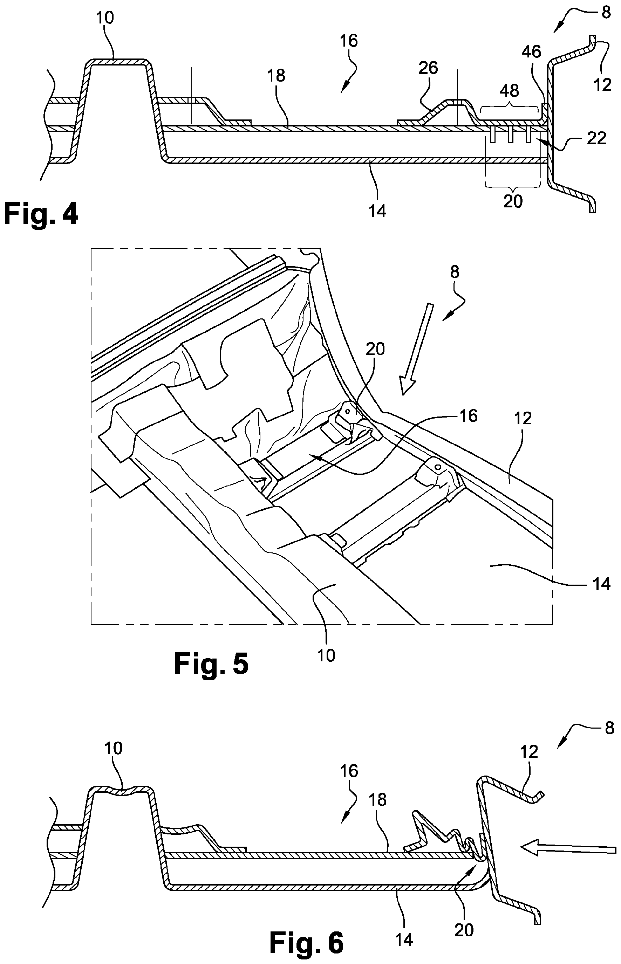

La figure 4 est une vue en coupe IV-IV du plancher 8 au niveau du ou d'un des profilés 16 s'étendant transversalement entre le tunnel 10 et le longeron 12. On peut voir le tunnel 10 à gauche de l'image, le longeron 12 à droite de l'image et la paroi principale 14 s'étendant entre le tunnel 10 et le longeron 12. On peut également voir le profilé 16, la paroi profilée 18, ainsi que la portion 20 avec les moyens 22 favorisant la déformation en compression réalisés sur la paroi profilée 18 ; en l'occurrence les moyens 22 sont des lumières 30 comme vu en relation avec la figure 3. On peut finalement observer le podium 26 de siège rapporté sur le profilé 16, et s'étendant au-dessus de la portion 20 avec les moyens 22 favorisant la déformation en compression du profilé 16, et fixé au longeron 12. Le podium 26 peut comprendre des pattes 46 de fixation au longeron 12. Le profilé 16 peut être en tôle d'acier. Le podium 26 peut être en tôle d'acier ou d'aluminium, il est favorablement dans un matériau ayant un module d'élasticité inférieur à celui du matériau du profilé 16 correspondant, préférentiellement inférieur à 80% dudit module, encore plus préférentiellement inférieur à 60%. Cette mesure est intéressante en ce qu'elle favorise la déformation du podium 26 en cas de choc latéral, en particulier la portion 48 du podium 26 s'étendant au-dessus de la portion 20 du profilé 16.

La figure 5 est une vue en perspective du plancher 8 en cours de déformation en cas de choc latéral à 75° à 32km/h, en l'occurrence moins de 100ms après le choc. La flèche sur l'image indique l'orientation et la localisation du choc contre le longeron 12, en l'occurrence celui à gauche du véhicule. On peut voir que la paroi principale 14 reliant le tunnel 10 et le longeron 12, en particulier sa liaison au longeron 12, est intacte; La portion 20 du profilé 16, comprenant les moyens favorisant sa compression, vue à l'état déformée, est comprimée dans la direction transversale du véhicule.

La figure 6 est une vue en coupe IV-IV transversale du plancher 8, identique à celle vue à la figure 5, en l'occurrence la coupe est celle du plancher 8 en cours de déformation en cas de choc latéral à 75° à 32km/h, comme présenté en relation avec la figure précédente. La portion 20 sur le profilé 16 est à l'état déformé en compression. La déformation en accordéon de cette portion a favorisé l'absorption d'énergie du choc ; on peut voir les plis sur la paroi 18 à l'état déformé.

## Revendications

1. Plancher (8) de véhicule automobile (2) comprenant :
- un tunnel central (10) ;
- au moins un longeron (12) s'étendant le long et à distance du tunnel central (12) ;
- une paroi (14) s'étendant transversalement depuis le tunnel central (10) jusqu'au longeron (12) ; et
- un ou plusieurs profilés (16) s'étendant transversalement sur la paroi (14) entre le tunnel (10) et le longeron (12) ;
le ou au moins un des profilés (16) comprenant une paroi profilée (18) s'étendant sur la longueur du profilé (16), **caractérisé en ce que** ladite paroi profilée (18) comprend à son extrémité du côté du longeron, une portion (20) avec des moyens (22) favorisant la déformation en compression dudit profilé (16) en cas de choc latéral.

2. Plancher (8) selon la revendication 1, **caractérisé en ce que** les moyens (22) favorisant la déformation en compression comprennent une ou plusieurs encoches, lumières, ondulations, et/ou nervures sur la paroi profilée (18).

3. Plancher (8) selon l'une des revendications 1 et 2, **caractérisé en ce que** les moyens (22) favorisant la déformation en compression s'étendent transversalement à la direction principale du ou des profilés (16), préférentiellement de manière successive le long de la dite direction.

4. Plancher (8) selon l'une des revendications 1 à 3, **caractérisé en ce que** la paroi (18) du profilé (16) forme au moins deux arêtes longitudinales (28), les moyens (22) favorisant la déformation en compression s'étendant transversalement à la direction principale du ou des profilés (16) sur au moins une des deux arêtes (28), préférentiellement sur les deux arêtes (28).

5. Plancher (8) selon l'une des revendications 1 à 4, **caractérisé en ce que** les moyens (22) favorisant la déformation en compression comprennent des lumières (30) pratiquées dans la paroi (18) du profilé (16), chacune desdites lumières (30) présentant une dimension longitudinale moyenne de plus de 4mm, préférentiellement 6mm, encore plus préférentiellement 8mm.

6. Plancher (8) selon la revendication 5, **caractérisé en ce que** chacune des lumières (30) a une surface comprise entre 40mm² et 400mm², préférentiellement entre 60mm² et 300mm².

7. Plancher (8) selon l'une des revendications 5 et 6, **caractérisé en ce que** le profilé (16) présente une section en U renversé avec une base (32) et deux jambes (34) s'étendant depuis la base (32), les lumières (30) favorisant la déformation en compression étant situés au niveau des jonctions (36) entre la base (32) et les jambes (34) dudit profil en U.

8. Plancher (8) selon l'une des revendications 5 à 7, **caractérisé en ce que** le profilé (16) comprend au moins deux rangées (40, 42) longitudinales de lumières (30) favorisant la déformation en compression, chaque rangée (40, 42) comprenant au moins deux, préférentiellement au moins trois desdites lumières (30).

9. Plancher (8) selon l'une des revendications 1 à 8, **caractérisé en ce qu'**il comprend un podium de siège (26) rapporté sur le ou chacun des profilés (16), ledit podium (26) s'étendant vers le longeron (12) au-dessus de la portion (20) comprenant les moyens (22) favorisant la déformation en compression, et étant fixé par soudage directement au longeron (12).

10. Véhicule automobile (2) comprenant un plancher (8), **caractérisé en ce que** le plancher (8) est conforme à l'une des revendications 1 à 9.

## Patentansprüche

1. Fußboden (8) für ein Kraftfahrzeug (2), umfassend:
- einen zentralen Tunnel (10);
- mindestens einen Längsträger (12), der sich entlang des zentralen Tunnels (12) und in einem Abstand zu diesem erstreckt;
- eine Wand (14), die sich quer vom zentralen Tunnel (10) bis zum Längsträger (12) erstreckt; und
- ein oder mehrere Profile (16), die sich quer zur Wand (14) zwischen dem Tunnel (10) und dem Längsträger (12) erstrecken;
wobei das oder mindestens eines der Profile (16) eine Profilwand (18) umfasst, die sich auf der Länge des Profils (16) erstreckt, **dadurch gekennzeichnet, dass** die Profilwand (18) an ihrem Ende auf der Seite des Längsträgers einen Abschnitt (20) mit Mitteln (22), die die Kompressionsverformung des Profils (16) im Falle eines Seitenaufpralls begünstigen, umfasst.

2. Fußboden (8) nach Anspruch 1, **dadurch gekennzeichnet, dass** die Mittel (22), die die Kompressionsverformung begünstigen, eine oder mehrere Kerben, Öffnungen, Wellungen und/oder Rippen auf der Profilwand (18) umfassen.

3. Fußboden (8) nach einem der Ansprüche 1 und 2, **dadurch gekennzeichnet, dass** sich die Mittel (22), die die Kompressionsverformung begünstigen, quer zur Hauptrichtung des oder der Profile (16), vorzugsweise nacheinander entlang der Richtung, erstrecken.

4. Fußboden (8) nach einem der Ansprüche 1 bis 3, **dadurch gekennzeichnet, dass** die Wand (18) des Profils (16) mindestens zwei Längskanten (28) bildet, wobei sich die Mittel (22), die die Kompressionsverformung begünstigen, quer zur Hauptrichtung des oder der Profile (16) auf mindestens einer der zwei Kanten (28), vorzugsweise auf beiden Kanten (28), erstrecken.

5. Fußboden (8) nach einem der Ansprüche 1 bis 4, **dadurch gekennzeichnet, dass** die Mittel (22), die die Kompressionsverformung begünstigen, Öffnungen (30) umfassen, die in der Wand (18) des Profils (16) vorgesehen sind, wobei jede der Öffnungen (30) eine durchschnittliche Längsabmessung von mehr als 4 mm, vorzugsweise 6 mm, noch bevorzugter 8 mm, aufweist.

6. Fußboden (8) nach Anspruch 5, **dadurch gekennzeichnet, dass** jede der Öffnungen (30) eine Oberfläche zwischen 40 mm² und 400 mm², vorzugsweise zwischen 60 mm² und 300 mm², hat.

7. Fußboden (8) nach einem der Ansprüche 5 und 6, **dadurch gekennzeichnet, dass** das Profil (16) einen Querschnitt in Form eines umgekehrten U mit einer Basis (32) und zwei Schenkeln (34), die sich von der Basis (32) aus erstrecken aufweist, wobei die Öffnungen (30), die die Kompressionsverformung begünstigen, im Bereich der Verbindungen (36) zwischen der Basis (32) und den Schenkeln (34) des U-Profils angeordnet sind.

8. Fußboden (8) nach einem der Ansprüche 5 bis 7, **dadurch gekennzeichnet, dass** das Profil (16) mindestens zwei Längsreihen (40, 42) von Öffnungen (30), die die Kompressionsverformung begünstigen, umfasst, wobei jede Reihe (40, 42) mindestens zwei, vorzugsweise mindestens drei der Öffnungen (30) umfasst.

9. Fußboden (8) nach einem der Ansprüche 1 bis 8, **dadurch gekennzeichnet, dass** er ein Sitzpodium (26) umfasst, das auf das oder jedes der Profile (16) aufgesetzt ist, wobei sich das Podium (26) zum Längsträger (12) über dem Abschnitt (20), umfassend, die Mittel (22), die die Kompressionsverformung begünstigen, hin erstreckt und durch Schweißen direkt am Längsträger (12) befestigt ist.

10. Kraftfahrzeug (2), umfassend einen Fußboden (8), **dadurch gekennzeichnet, dass** der Fußboden (8) nach einem der Ansprüche 1 bis 9 ausgeführt ist.

## Claims

1. A floor (8) of a motor vehicle (2) including:
- a central tunnel (10);
- at least one sill (12) extending along and at a distance from the central tunnel (12);
- a wall (14) extending transversely from the central tunnel (10) to the sill (12); and
- one or more profiles (16) extending transversely on the wall (14) between the tunnel (10) and the sill (12);
the or at least one of the profiles (16) including a profiled wall (18) extending over the length of the profile (16), **characterized in that** said profiled wall (18) includes at its end on the sill side a portion (20) with means (22) promoting the compressive deformation of said profile (16) in the event of a side impact.

2. The floor (8) according to Claim 1, **characterized in that** the means (22) promoting the compressive deformation include one or more notches, slots, undulations, and/or ribs on the profiled wall (18).

3. The floor (8) according to one of Claims 1 and 2, **characterized in that** the means (22) promoting the compressive deformation extend transversely to the main direction of the profile(s) (16), preferably successively along said direction.

4. The floor (8) according to one of Claims 1 to 3, **characterized in that** the wall (18) of the profile (16) forms at least two longitudinal edges (28), the means (22) promoting the compressive deformation extending transversely to the main direction of the profile (s) (16) on at least one of the two edges (28), preferably on the two edges (28).

5. The floor (8) according to one of Claims 1 to 4, **characterized in that** the means (22) promoting the compressive deformation include slots (30) formed in the wall (18) of the profile (16), each of said slots (30) having a mean longitudinal dimension of more than 4 mm, preferably 6 mm, yet more preferably 8 mm.

6. The floor (8) according to Claim 5, **characterized in that** each of the slots (30) has an area comprised between 40 mm² and 400 mm², preferably between 60 mm² and 300 mm².

7. The floor (8) according to one of Claims 5 and 6, **characterized in that** the profile (16) has an inverted U-shaped cross-section with a base (32) and two legs (34) extending from the base (32), the slots (30) promoting the compressive deformation being situated at the level of the junctions (36) between the base (32) and the legs (34) of said U-shaped profile.

8. The floor (8) according to one of Claims 5 to 7, **characterized in that** the profile (16) includes at least two longitudinal rows (40, 42) of slots (30) promoting the compressive deformation, each row (40, 42) including at least two, preferably at least three of said slots (30).

9. The floor (8) according to one of Claims 1 to 8, **characterized in that** it includes a seat podium (26) placed on the or each of the profiles (16), said podium (26) extending towards the sill (12) above the portion (20) including the means (22) promoting the compressive deformation, and being fixed by welding directly to the sill (12).

10. A motor vehicle (2) including a floor (8), **characterized in that** the floor (8) is in accordance with one of Claims 1 to 9.
